Europäisches Patentamt

European Patent Office

Office européen des brevets

(11) Publication number: **0 179 622**
**B1**

(12) **EUROPEAN PATENT SPECIFICATION**

(45) Date of publication of patent specification: **19.07.89**

(51) Int. Cl.⁴: **B 29 C 45/00,** B 29 C 45/06, B 29 C 45/17

(21) Application number: **85307515.8**

(22) Date of filing: **17.10.85**

(54) **Press apparatus for magnetic injection moulding machines.**

(30) Priority: **18.10.84 JP 156468/84**

(43) Date of publication of application:
**30.04.86 Bulletin 86/18**

(45) Publication of the grant of the patent:
**19.07.89 Bulletin 89/29**

(84) Designated Contracting States:
**DE FR GB**

(56) References cited:
**DE-A-2 105 331**
**FR-A-1 311 191**

**PATENTS ABSTRACTS OF JAPAN, vol. 8, no.
272 (E-284)1709r, 13th December 1984; &
JP-A-59 143 312 (NIPPON SEIKOSHO K.K.)
16-08-1984**

**PATENTS ABSTRACTS OF JAPAN, vol. 4, no.
125 (M-30)607r, 3rd September 1980; & JP-A-
55 86 640 (DAIDO TOKUSHUKO K.K.) 26-06-
1980**

(73) Proprietor: **THE JAPAN STEEL WORKS, LTD.
12-1, Yurakucho-1-chome, Chiyoda-ku
Tokyo (JP)**

(72) Inventor: **Yokota, Akira c/o The Japan Steel
Works, Ltd.
Hiroshima Works No. 6-1, Funakoshiminami
1-chome
Aki-ku Hiroshima-shi Hiroshima (JP)**
Inventor: **Kato, Masashi c/o The Japan Steel
Works, Ltd.
Hiroshima Works No. 6-1, Funakoshiminami
1-chome
Aki-ku Hiroshima-shi Hiroshima (JP)**
Inventor: **Fujii, Katsuhiro c/o The Japan Steel
Works, Ltd.
Hiroshima Works No. 6-1, Funakoshiminami
1-chome
Aki-ku Hiroshima-shi Hiroshima (JP)**

(74) Representative: **Brunner, Michael John et al
GILL JENNINGS & EVERY 53-64 Chancery Lane
London WC2A 1HN (GB)**

## Description

The present invention relates to a press apparatus used for magnetic injection moulding machines comprising an upper platen having a downwardly projecting portion, an opposed lower platen having an upwardly projecting portion, magnetic coils surrounding the projecting portions, an upper metal mould mounted on the lower surface of the respective projecting portion, a movable table adapted to be movable between the upper metal mould and the lower projecting portion and a lower metal mould on the movable table.

In a conventional press apparatus for magnetic injection moulding machines of the vertical type using a movable table such as a rotary table and a slide table, there are three types of press apparatus commonly used. The first type has a metal mould surrounded by an annular magnetic coil for producing magnetic flux, the second type has a press surrounded by an annular magnetic coil for producing magnetic flux, and the third type has a platen surrounded by an annular magnetic coil for producing magnetic flux.

In the case of the first type, it is neccessary to provide the magnetic coil not only at the upper metal mould but also at the lower metal mould mounted on a movable table, and therefore the wiring of wires for supplying electric power to the coil and which are movable together with the movable table becomes very complex and further it becomes undesirably necessary to provide a plurality of coils equal in number to the number of the lower metal moulds provided on the movable table, thereby increasing the cost of the injection moulding machines. In the case of the second type, the whole dimension of an injection moulding machine becomes bulky and complex and it is necessary to move the magnetic coils by using the hydraulic equipment exclusively used for moving the magnetic coils whenever a moulded workpiece is removed from the metal mould. Furthermore, it is necessary to use an expensive non-magnetic steel for tie bars in order that the tie bars disposed at the inner side of the magnetic coil do not serve to form a portion of a magnetic circuit.

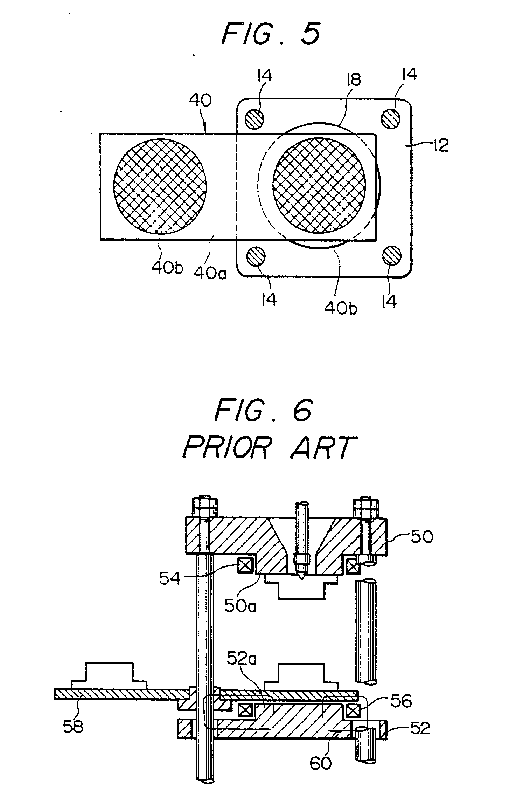

The above mentioned drawbacks are eliminated in the case of third type, as shown in Figure 6, in which annular magnetic coils 54 and 56 are respectively disposed at the periphery portion of the projected portions 50a and 52a of an upper metal mould 50 and a lower metal mould 52. In the case of a rotary table 58 made of ferromagnetic material, however, there is an undesirable magnetic circuit having the magnetic flux flow passing the rotary table 58 through the projected portion 52a and the lower metal mould 52 as shown by an arrow 60 in Figure 6, thereby undesirably decreasing the magnetic flux to be utilized for the upper and lower metal moulds. Furthermore, in the case of rotary table 58 made of non-magnetic material, the flow of the magnetic fluz is undesirably disconnected by the non-magnetic rotary table 58 thereby increasing the magnetic resistance of the magnetic circuit and decreasing the efficiency of the magnetic field.

An object of the present invention is to eliminate the above mentioned drawbacks in the conventional press apparatus for magnetic injection moulding machines, and to present a press apparatus in which a magnetic field generated by a magnetic coil is fully utilized for metal moulds and the efficiency of the magnetic field is maintained.

According to the present invention, only the portion of a movable table, such as a rotary table or slide table, which is required for forming the flow of a magnetic flux in a normal magnetic circuit, is made of ferromagnetic material, and the other portion of the movable table is made of non-magnetic material. In brief, only the portion of the movable table closely contacted with the metal mould is made of ferromagnetic material in contrast to the other portion made of non-magnetic material.

According to the above mentioned construction of the movable table, there is provided a predetermined magnetic circuit path through the lower platen, the ferromagnetic portion of the movable table, the lower metal mould, the upper metal mould, the upper platen, a tie bar, and the lower platen. Since the ferromagnetic portion of the movable table and the tie bar are magnetically insulated by the non-magnetic portion of the movable table, no magnetic flux flows from the movable table into the tie bar thereby effectively utilizing the magnetic flux for the metal mould and preventing the magnetic circuit from increasing the magnetic resistance.

In the drawings:-

Figure 1 is a plan view showing a press apparatus for magnetic injection moulding machines as a first embodiment of the present invention;

Figure 2 is a schematic plan view taken along the line II-II in Figure 1;

Figure 3 is a view showing the flow of a magnetic flux in the press apparatus shown in Figure 1;

Figure 4 shows a press apparatus as a second embodiment of the present invention;

Figure 5 is a schematic plan view taken along the line V-V in Figure 4; and

Figure 6 is a plan view showing a conventional press apparatus for magnetic injection machines.

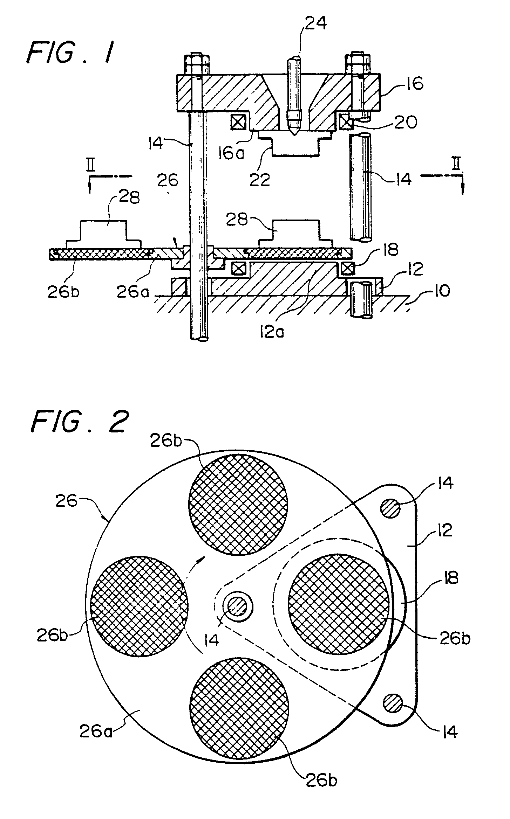

Referring now to Figures 1 to 3 a first embodiment of the present invention is explained. In Figure 1 a lower platen 12 is mounted on a bed 10 and an upper platen 16 is supported opposite to the lower platen 12 by three tie bars 14. The upper platen 16 may be moved upwardly and downwardly by a hydraulic cylinder (not shown). There are provided opposed projecting portions 12a and 16a respectively projected from the lower and upper platens 12 and 16. Furthermore, there are provided annular magnetic coils 18 and 20 surrounding the projecting portions 12a and 16a respectively. An upper metal mould 22 is mounted on the lower surface of the portion 16a. A molten resin may be injected from an injection cylinder 24 into the upper metal mould 22. The lower platen 12, upper platen 16, the bars 14 and upper metal mould 22 are made of ferromagnetic material. A rotary table 26 is rotatably mounted around one of three tie bars 14 as shown in Figure 2. The rotary table 26 is constituted such that four ferromagnetic portions 26b are respectively fitted into four holes mounted on a non-magnetic portion 26a, and four metal moulds 28 are respectively placed on the four ferromagnetic portions 26b. The lower metal mould 28 is made of ferromagnetic material.

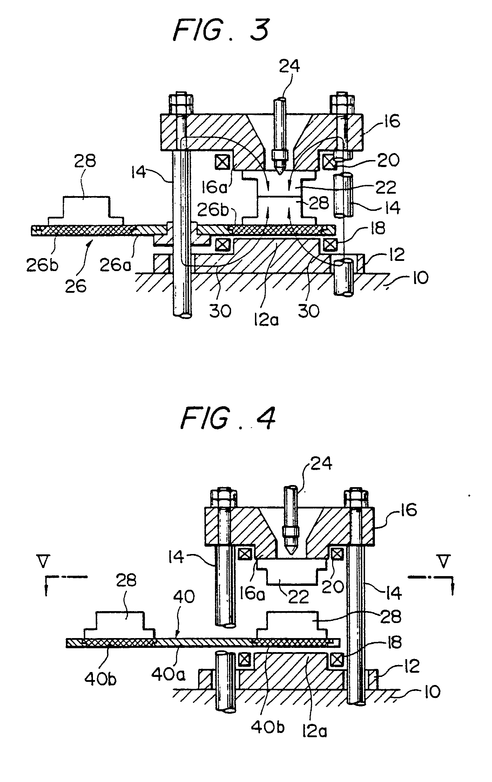

In operation of the first embodiment, a current is made to flow in the magnetic coils 18 and 20 to produce an equidirectional magnetic flux. As a result a magnetic flow 30 flows in the path of the projection 12a of the lower platen 12, the ferromagnetic portion 26b of the movable table 26, the lower metal mould 28, the upper metal mould 22, the projecting portion 16a of the upper platen 16, the upper platen 16, the tie bar 14 and the lower platen 12, as shown in Figure 3. By this magnetic flux 30, the workpiece is provided with a magnetic orientation. After a moulding operation, the upper and lower metal moulds 22 and 28 are opened and the rotary table 26 is rotated by 90° thereby placing the next lower metal mould 28 at the position opposite to the upper metal mould 22. With respect to the other lower metal moulds, usual operations such as an insertion of inserting pieces and a removal of a moulded workpiece are effected.

As mentioned above, only the portion of the rotary table 26 closely contacting the lower metal mould 28 is made of ferromagnetic material, and the other portions of the rotary table 26 are made of non-magnetic material, so that no flow of the magnetic flux is produced between the rotary table 26 and the tie bar 14. Therefore the magnetic flux 30 generated by the magnetic coil is fully utilized for the workpiece (not shown) through the upper and lower metal moulds 22 and 28 with high efficiency. Furthermore, the magnetic flux 30 passes through the ferromagnetic portion 26b of the rotary table 26 therefore the magnetic resistance is reduced and the efficiency of the magnetic field is well maintained.

Referring now to Figures 4 and 5 a second embodiment is shown. The second embodiment relates to a press apparatus of the slide table type. In Figures 4 and 5, the same and equivalent parts as those of Figures 1 to 3 are denoted by the same reference numerals. In Figures 4 and 5 a slide table 40 is composed of a non-magnetic portion 40a and a ferromagnetic portion 40b. As in the first embodiment, only the ferromagnetic portion 40b closely contacts the lower metal mould 28 thereby producing an efficient magnetic flux passing through the ferromagnetic portion 40b.

## Claims

1. A press apparatus for a magnetic injection moulding machine comprising an upper platen (16) having a downwardly projecting portion (16a), an opposed lower platen (12) having an upwardly projecting portion (12a), magnetic coils (18, 20) surrounding the projecting portions, an upper metal mould (22) mounted on the lower surface of the respective projecting portion (16a), a movable table (26) adapted to be movable between the upper metal mould (22) and the lower projecting portion (12a), and a lower metal mould (28) on the movable table (26), characterized in that only the portion (26b) of the movable table (26) closely contacting the lower metal mould (28) is made of ferromagnetic material and the other portions (26a) of the movable table (26) are made of non-magnetic material.

2. Apparatus according to claim 1, wherein the movable table (26) is rotatably mounted around a tie bar (14).

3. Apparatus according to claim 1, wherein the movable table (40) is slidably mounted.

4. Apparatus according to any of claims 1 to 3, wherein the magnetic flux generated in the magnetic coils (18, 20) is arranged to flow in the path of the lower projecting portion (12a), the ferromagnetic portion (26b) of the movable table (26), the lower metal mould (28), the upper metal mould (22), the upper projecting portion (16a), the upper platen (16), a tie bar (14), and the lower platen (12).

## Patentansprüche

1. Presse(nvorrichtung) für eine magnetische Spritzgießmaschine, umfassend eine obere Aufspannplatte (16) mit einem nach unten vorstehenden Abschnitt (16a), eine gegenüberstehende untere Aufspannplatte (12) mit einem nach oben vorstehenden Abschnitt (12a), die vorstehenden Abschnitte umschließende magnetische Wicklungen oder Spulen (18, 20), einen an der Unterseite des betreffenden vorstehenden Abschnitts (16a) montierten oberen Metall-Formteil (22), einen verschiebbaren Tisch (26), der zwischen dem oberen Metall-Formteil (22) und dem unteren vorstehenden Abschnitt (12a) bewegbar ist, sowie einen unteren Metall-Formteil (28) am verschiebbaren Tisch (26), dadurch gekennzeichnet, daß nur der mit dem unteren Metall-Formteil (28) in innige Berührung bringbare Abschnitt (26b) des verschiebbaren Tisches (26) aus ferromagnetischem Material geformt ist und die anderen Abschnitte (26a) des verschiebbaren Tisches (26) aus nichtmagnetischem Material geformt sind.

2. Vorrichtung nach Anspruch 1, dadurch gekennzeichnet, daß der verschiebbare Tisch (26) um eine Spannstange (14) drehbar montiert bzw. gelagert ist.

3. Vorrichtung nach Anspruch 1, dadurch gekennzeichnet, daß der verschiebbare Tisch (40) gleitend verschiebbar montiert bzw. gelagert ist.

4. Vorrichtung nach einem der Ansprüche 1 bis 3, dadurch gekennzeichnet, daß der (das) in den magnetischen Spulen (18, 20) erzeugte Magnetfluß oder -feld so ausgelegt ist, daß er (es) in der Strecke aus dem unteren vorstehenden Abschnitt (12a), dem ferromagnetischen Abschnitt (26b) des verschiebbaren Tisches (26), dem unteren Metall-Formteil (28), dem oberen Metall-Formteil (22), dem oberen vorstehenden Abschnitt (16a), der oberen Aufspannplatte (16), einer Spannstange (14) und der unteren Aufspannplatte (12) fließt.

## Revendications

1. Presse pour une machine magnétique de moulage par injection, comportant un plateau supérieur (16) qui présente une portion (16a) saillante vers le bas, un plateau inférieur (12), situé en face, qui présente une portion (12a) saillante vers le haut, des bobines magnétiques (18, 20) qui entourent les portions saillantes, une partie supérieure d'un moule métallique (22) montée sur la surface inférieure de la partie saillante respective (16a), une table mobile (26) conçue pour être mobile entre la partie supérieure du moule métallique (22) et la portion saillante inférieure (12a), et une portion inférieure du moule métallique (28) placée sur la table mobile (26), caractérisée en ce que seule la portion (26b) de la table mobile (26) qui vient étroitement en contact avec la partie inférieure du moule métallique (28) est fabriquée en matériau ferromagnétique; et en ce que les autres portions (26a) de la table mobile (26) sont fabriquées en un matériau non magnétique.

2. Presse selon la revendication 1, dans laquelle la table mobile (26) est montée de façon à tourner autour d'un tirant (14).

3. Presse selon la revendication 1, dans laquelle la table mobile (40) est montée de façon à coulisser.

4. Presse selon l'une quelconque des revendications 1 à 3, dans laquelle le flux magnétique généré dans des bobines magnétiques (18, 20) est prévu passer par le chemin formé de la portion saillante inférieure (12a), de la portion ferromagnétique (26b) de la table mobile (26), de la partie inférieure du moule métallique (28), de la partie supérieure du moule métallique (22), de la portion saillante supérieure (16a), du plateau supérieure (16a), d'un tirant (14) et du plateau inférieur (12).

FIG . 1

FIG . 2

FIG. 3

FIG. 4

# FIG. 5

# FIG. 6
# PRIOR ART